# EUROPEAN PATENT APPLICATION

(11) **EP 3 185 412 A1**
(43) Date of publication of application: **28.06.2017**
(21) Application number: 15460133.0
(22) Date of filing: 23.12.2015
(51) Int. Cl.: H02S 40/44

(54) **PHOTOVOLTAIC PANEL WITH THERMAL ENERGY COLLECTION SYSTEM**

(71) Applicant: Gluchowski, Jacek, 65-018 Zielona Gora (PL); ECOENERGIA, 65-018 Zielona Gora (PL)
(72) Inventor: GRECH, Radoslaw, 65-101 Zielona Gora (PL); KOBYLECKI, Grzegorz, 65-039 Zielona Gora (PL)

(57) **Abstract**

The utility model relates to a photovoltaic panel with a system for collection of thermal energy, comprised of a network of capillary tubes terminated in a conduit connected to an external socket, characterized in that to the back side wall (3) of the photovoltaic panel (1) within the frame (2) of the photovoltaic panel (1) there is mounted, at a distance of 2 mm, a system for collection of thermal energy (4), comprised of a capillary mat (5) forming a network of capillary tubes (6) affixed with an adhesive to a 2.5 cm thick EPS board (7), 1590 mm × 942 mm in size.

## Description

The utility model relates to a photovoltaic panel with a system for collection of thermal energy, applicable especially in home PV systems.

From patent specification CN203367325 there is known a photovoltaic panel with an insulating layer forming an integral structure of the panel placed on its back side. The surface of the insulating layer is provided with a plurality of evenly distributed capillary networks terminating in a thermal conduit. The thickness of the insulation layer is greater than 1 mm. The diameter of the capillary is greater than 0.1 mm.

The purpose of the utility model is to ensure accumulation of heat by the photovoltaic panel, cooling of the panel and improvement of energy generation performance as well as extension of the period of operation of the photovoltaic panel.

Photovoltaic panel with a system for collection of thermal energy, comprised of a network of capillary tubes terminated in a conduit connected to an external socket is characterized, according to the utility model, in that to the back side wall of the photovoltaic panel within the frame of the photovoltaic panel there is mounted, at a distance of 2 mm, a system for collection of thermal energy, comprised of a capillary mat forming a network of capillary tubes affixed with an adhesive to a 2.5 cm thick EPS board, 1590 mm × 942 mm in size.
The diameter of the capillary tube is not more than 2 mm.
In the side edges of the frame of the photovoltaic panel there are through openings with ends of the capillary tubes placed in them.
The capillary mat is connected with the PVC tube 20 mm in diameter, passing through an opening made in the EPS board and the frame of the photovoltaic panel, and terminated with a threaded coupling.
The maintaining of a distance between the thermal energy collection system and the photovoltaic panel ensures air flow and at the same time cooling of the photovoltaic panel.

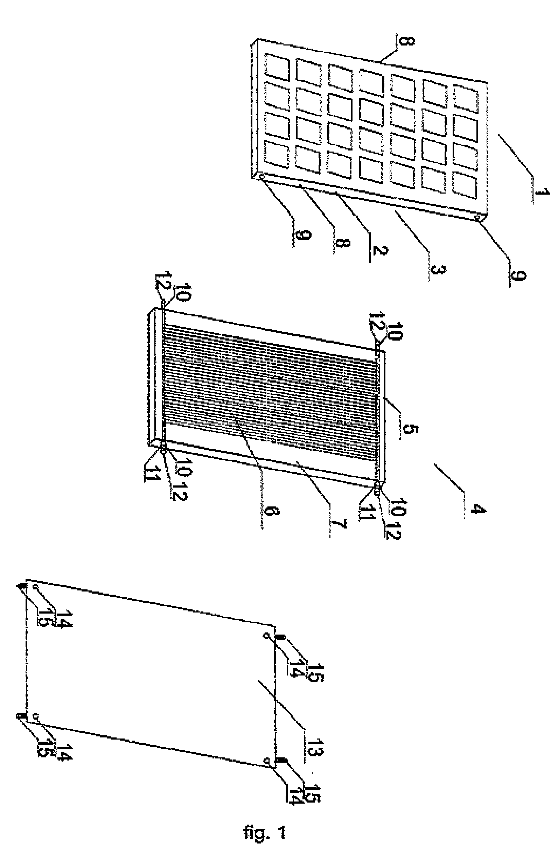

The thermal energy collection system according to the utility model can be adapted to the dimensions of the currently used photovoltaic panels. According to the utility model, the solution is a light design, easy to install and one that can be installed in both new and already existing photovoltaic systems.
The utility model is presented in fig. 1, showing the photovoltaic panel with a thermal energy collection system in an exploded perspective view.

The photovoltaic panel 1 presented in fig. 1, 1640 mm × 992 mm in size, is provided with a frame 2. On the side of the back side wall 3 of the photovoltaic panel 1, in its frame 2, a thermal energy collection system 4 is installed at a distance of 2 mm from the wall 3, the system consisting of a capillary mat 5, forming of a network of capillary tubes 6, affixed with an adhesive to an EPS board 7,2.5 cm thick and 1590 mm × 942 mm in size, with recessed openings for embedding the mat 5. The diameter of the capillary tube 6 is 2 mm.
In the side edges 8 of the frame 2 of the photovoltaic panel 1 there are through longitudinal openings 9 with ends of the capillary tubes 6 placed in them.
The capillary mat 5 is connected with a PVC tube 10; 20 mm in diameter, passing through an opening 11 made in the board 7 and frame 2 of the photovoltaic panel 1, terminated with a threaded coupling 12. The board 7 made of EPS is attached to the frame 2 of the photovoltaic panel 1, using a PVC board 13 provided with four openings 14, with screws 15, screwed into the frame 2 of the photovoltaic panel 1.
Photovoltaic panel 1 with a thermal energy collection system 4 works in the heating system, transferring the heat stream by means of water or glycol, from the thermal energy collection system 4 to the heating circuit of the central heating system or domestic hot water system.
Power received from the thermal energy collection system for the photovoltaic panel 1640 mm × 92 mm in size is up to 400 W, depending on the temperature of the photovoltaic panel in the range of 20 - 65°C.
The ensuring of collection of thermal energy from the surface of the photovoltaic panel has a positive effect on its operating conditions, improving its performance. The reduction of the panel temperature by 10°C through the use of a heat exchanger results in improvement of the panel operating efficiency by 5%.

## Claims

1. Photovoltaic panel with a system for collection of thermal energy, comprised of a network of capillary tubes terminated in a conduit connected to an external socket, **characterized in that** to the back side wall (3) of the photovoltaic panel (1) within the frame (2) of the photovoltaic panel (1) there is mounted, at a distance of 2 mm, a system for collection of thermal energy (4), comprised of a capillary mat (5) forming a network of capillary tubes (6) affixed with an adhesive to a 2.5 cm thick EPS board (7), 1590 mm × 942 mm in size.

2. The photovoltaic panel according to claim 1, **characterized in that** the diameter of the capillary tube (6) is not more than 2 mm.

3. The photovoltaic panel according to claim 1 or 2, **characterized in that** in the side edges (8) of the frame (2) of the photovoltaic panel (1) there are through longitudinal openings (9) with ends of the capillary tubes (6) placed in them.

4. The photovoltaic panel according to any claim from 1 to 3, **characterized in that** the capillary mat (5) is connected with the PVC tube (10), 20 mm in diameter, passing through an opening (11) made in the EPS board (7) and frame (2) of the photovoltaic panel (1), terminated with a threaded coupling (12).
